Europäisches Patentamt

European Patent Office

Office européen des brevets

(19)

(11) Publication number: **0 055 790**
A1

(12) **EUROPEAN PATENT APPLICATION**

(21) Application number: **81100036.3**

(22) Date of filing: **07.01.81**

(51) Int. Cl.³: **C 10 L 5/44**

(43) Date of publication of application:
**14.07.82 Bulletin 82/28**

(84) Designated Contracting States:
**AT BE CH DE FR GB IT LI LU NL SE**

(71) Applicant: **Catan, Gonzalo O. jr.**

**Manila(PH)**

(72) Inventor: **Catan, Gonzalo O. jr.**

**Manila(PH)**

(74) Representative: **Patentanwälte Beetz sen. - Beetz jr.
Timpe - Siegfried - Schmitt-Fumian
Steinsdorfstrasse 10
D-8000 München 22(DE)**

(54) **Green charcoal and process of manufacture.**

(57) The invention relates to a method for producing a green charcoal. This method comprises the following steps: gathering a cellulosic material, spraying said material with water, allowing said material to decay by letting it stand for several days, cutting and grinding said partially decayed material, measuring required amounts of said decayed material and mixing - if required - with pulverize coal, pelletizing and extruding the green charcoal mixture by means of suitable grinder and extrusion machine, sorting said pellets and drying them, and packing said green pellets. Thus, the invention provides a process for producing a green charcoal or fuel from a cellulosic biomass matter in an inexpensive manner.

EP 0 055 790 A1

Green Charcoal and Process of Manufacture

The present invention relates to in general to fuel composition. More particularly, this invention relates to green charcoal manufactured from cellulosic biomass matter such as grass, leaves, twigs, seaweeds, garbage, sawdust and other cellulosic materials and to the process of manufacturing thereof.

There are various kinds of charcoal presently available in the market today. Generally, these charcoal compositions require charring the raw materials in an enclosed burning chamber to produce a carbonized fuel and by compacting powdered charcoal with binders into briquettes which are more uniform and denser than ordinary charcoal.

The present kind of charcoal take a relatively long period of time to ignite and when burning, the flame and heat emitted is unsteady, thus, resulting in either overcooked or undercooked food.

Present types of charcoal are usually prepared from wood. In many areas, forests are denuded to provide the population with fuel. This use of wood as charcoal fuel goes against the country's desire to preserve its forests.

Fossile fuel which is generally used in industry is exhaustible. The world is now undergoing an energy crisis due to the cost of fossile fuel.

0154-31.841EP/-Ms

Another important fuel source in the Philippines is coal; however, this resource is also exhaustible. Continued use of coal at its present rate of consumption will result in depletion of the coal reserve in a matter of years.

With the present and ordinary types of fuel there exist several disadvantages; they are relatively expensive; they are exhaustible; they cost the country millions of pesos to procure thus draining our dollar resources. Production of wood charcoal depletes our country's forest reserve. Also it takes longer to wait for trees to grow.

It is therefore the object of this present invention to provide a process for producing green charcoal from grasses, leaves, twigs, seaweeds, garbage and other cellulosic materials alone or in judicious combination with coal or charcoal to produce a green charcoal that is economical, has a relatively higher and determinable BTU, is more easily ignited, burns longer with less smoke and has a more acceptable aromatic odor than ordinary charcoal or coal or coke with foul chemical odor.

Another object of this invention is to produce green charcoal as a substitute for fossile fuels and coal for use in industry, thereby, saving the country from draining its dollar reserves.

Another object of this invention is to produce charcoal briquettes without using outside binders such as starch, molasses, etc., but using the lignin of the basic raw materials such as grasses and leaves.

Further object of this invention is to provide a process for producing green charcoal fuel which can be used in industry thus decreasing the actual coal consumption by 20-100%.

It is another object of this invention to provide a process for utilizing cellulosic waste materials like grasses, leaves, twigs, seaweed, shrubs, sawdust, forest waste and cellulosic garbage in a process which permits their recycling into a transferable energy form. This recycling method can, thus, not only encourage environmental cleanliness and proper waste utilization but can also process the wastes into fuel which can be used by the community.

Another object of this invention is to provide a simplified process for making an economical raw material for the production of town gas and alcohol.

A further object of this invention is to provide a process using weeds, grasses and shrubs that normally compete with crops and trees, thus, permitting better growth of food-producing crops and also preserving forest.

Another object of this invention is to provide a process which can promote environmental cleanliness by gathering and using the waste cellulosic materials such as grasses, weeds and cellulosic garbage, thereby, assisting urban and rural communities in their drive for clean and beautiful surroundings. The cleaning of unsightly grasses and weeds in the community also minimizes breeding places of snakes, rats and other destructive pests.

A further object of this invention is to produce a green charcoal fuel which is standard and uniform in size, pelletized for easy handling and which has a high BTU, ignites easily and burns longer than ordinary charcoaled fuel.

Another object of this invention is to produce a green charcoal fuel which significantly speeds up the natural process of producing coal from nature. The natural process takes millions of years whereby this invention process can produce a similar fuel in a matter of days.

It is another object of this invention to produce a green charcoal fuel which when burned is reduced to a compact ash which retains the original form of the charcoal, thus permitting easy and clean disposal or for utilization in the manufacture of lye, soda ash, etc.

Further object of this invention is to produce a green charcoal fuel in which its BTU may be specified according to its use. The BTU of the resultant charcoal may be increased or decreased by adjusting the proportion of synergists/catalyst and raw materials.

Other objects and advantages of this present invention will become apparent from the following description.

Accordingly, this invention relates to the process of producing a green charcoalwhich comprises:

(a) gathering the cellulosic material selected from the group consisting of grasses, leaves, twigs, shrubs, giant kelp, water hyacinths, banana leaves or stalks, coconut leaves, blue green algae, sawdust, paper, cellulosic garbage, cellulosic agricultural waste and mixtures thereof;

(b) spraying, wetting or soaking said cellulosic material with water;

(c) allowing said cellulosic material to partially decay by letting it stand for 3 to 45 days;

(d) cutting and grinding the partially decayed cellulosic material;

(e) measuring required amounts of decayed cellulosic materials and mixing, if desired, pulverized coal in the proportionate amounts of 10%-90% to 90%-10% by weight, respectively, however, green charcoal can satisfactorily be produced alone or by itself, i.e. using only grasses and leaves;

(f) pelletizing and extruding the green charcoal mixture with the use of suitable grinder and extrusion machine;

(g) sorting the green charcoal pellets and drying them thoroughly;

(h) packing the resultant green charcoal pellets in sacks for storage or charcoaling and sale.

Coal is made from the combined action of millions of years of pressure, heat and partial decay of organic materials. This present invention process utilizes the same principle but in a very much faster method with the use of machines, catalyst and using lignin, the natural plant cement as binder. Green leaves, grasses, twigs, marine plants such as blue-green algae, water hyacinth and giant kelp and other seaweeds, cellulosic garbage, weeds, shrubs and other similar organic biomass are used in this invention process as basic raw materials to produce a highly usable form of transferable energy.

In this invention coal or charcoal may or may not be used. It is used as a carbonizing catalyst stimulating the energy-giving potential of the resultant green charcoal and used in adjusting the desired BTU. Coal or charcoal is advisable to use only in small percentage and when such materials are abundant and cheap in the area.

The use of charcoal as a catalyst, therefore, minimizes and reduces the use of coal or wood charcoal as primary fuel, thus, decreasing actual coal consumption from 20%-100%. This contributes to the conservation of our country's coal or wood reserve, thereby ensuring the Philippines a longer lasting coal and wood deposit.

The procedures of grass grinding, cutting mixing of the ground coal, charcoal or sawdust and partially decayed grasses, pelletizing procedures and the extrusion of green charcoal pellets may be combined into one integrated operation using a suitable machine with a minimum horsepower capacity of 15 HP. The reduction of coal or charcoal to its proper mesh size may be done in a conventional harmmer-mill.

These machines may be powered by either gasoline, electric hydropower or by a steam boiler which uses the green charcoal itself as fuel. Thus, this invention process may be considered portable, in that, it may be used in any part of the country which has sufficient cellulosic materials for use as raw materials.

When burned, the green charcoal emits a steady heat with low clean flame. The charcoal is easy to ignite and burns longer and hotter than ordinary charcoal. The resulting ashes remain in a compact form so that disposal of ashes is clean and easy.

The green charcoal produced in this invention process may be used directly as fuel for industry, especially in boilers which can be easily converted to the use of a solid fuel such as green charcoal.

The green charcoal resulting from this invention process may also be further processed into more conventional form by subjecting it to a conventional kiln or oven-type or retort charcoaling process. The resultant charged green charcoal may then be used for household purposes.

The resultant products of this invention, green charcoal, can be utilized as raw material for the manufacture of town gas, alcohol and charcoal for residential and commercial use. The green charcoal may be used as is, to fuel industrial boilers; it does not have to be transformed into coke. Activated charcoal can also be produced from green charcoal.

It has been discovered in this invention process that the BTU of the resultant green charcoal exceeds the total BTU measurement of individual components used in the process. This indicates the synergistic and catalystic action brought about by the action of the coal or charcoal on the decayed grasses, leaves, twigs, and other cellulosic matter used as raw materials.

It has also been discovered in this invention process that the lignin, the natural cement of plants serve as binder, thus, giving the green charcoal mixture a dense but pliable consistency which improves the firmness and conformation of the end product, without having to use outside binders making the invention process economical. The cell fibers serve as the natural structural support.

In this invention, a wide variety of green cellulosic materials including but not limited to grasses, leaves, twigs, weeds, shrubs, marine plants such as algae, water hyacinths, giant kelp and other seaweeds, together with all forms and compositions of cellulosic garbage and agricultural waste materials may be used to produce green charcoal without changing the intent of the process claimed in this invention.

As shown in the various examples given in this patent, the proportion of cellulosic materials to coal or charcoal may range from 10-90% and vice versa. However, extensive research has shown that the most desirable range is in the proportion of 40-60%. A higher proportion of coal in the mixture is not only an economical but results in dim ambers and the release or irritating smoke.

The proportion of the various cellulosic materials, ground coal may vary accordingly to the level of BTU desired in the resultant product. It is one advantage of this invention that by using this process, the resultant green charcoal now can have a range of BTU levels depending on the proportionate combination of materials. Thus, green charcoal may be produced with BTU of 20,000 or a BTU of 10,000 or a BTU that may be either higher or lower than these two figures.

It has been found that although it is possible to use freshly cut grass in this invention process, the use of partially decayed grass or similar cellulosic material gives a 10-15% higher BTU than if freshly green material is used.

It is also found that more methane or alcohol derivative may be generated from green charcoal product using partially decayed organic matter than from green charcoal using freshly cut organic matter.

The process of producing green charcoal in accordance with the present invention shall hereinafter be described in detail:

Gather grasses, leaves, twigs, water hyacinth, giant kelp, blue-green algae and other cellulosic and waste materials including garbage matter, and wet thoroughly these cellulosic materials with water.

Allow the soaked cellulosic materials to partially decay by letting them stand for 3-45 days turning them occasionally to prevent excessive interior heat.

Reduce chunks of coal or charcoal to 10-100 mesh size or finer by processing, grinding and pulverizing the coal in a suitable machine.

Measure required amounts of decayed cellulosic materials and pulverized coal in a proportionate ratio of from 10-90% to 90-10% by weight respectively.

The mixture is then passed through a pelletizing and extrusion machine to grind, compact the green charcoal mixture and form into green charcoal pellets of desired size.

Pure grass or leaves charcoal can be made and can still yield an average of 8,758 BTU using RETORT charcoaling, average temperature of 244 $^{\circ}$C and burning time of 45 minutes for 100 grams. The 60:40 mixture, grass: coal on moisture basis, 90:10 grass: coal mixture on weight basis produce 14,4% more BTU, 25% more in burning time and 65% more in temperature.

The resultant green charcoal pellets are then sorted and placed on suitable pellets and dried thoroughly.

The dried green charcoal pellets are placed in suitable sack or container for storage and sale or for making into charcoal and town gas.

The following examples illustrate the present invention and are not to be construed as limiting the invention hereinafter claimed. Several modifications and variations can be practiced without departing from the scope and spirit of the invention.

Example I

Green charcoal using pure grass and leaves:

Gather assorted grass and leaves often thrown or wastes in both urban and agricultural areas. Pile it near source of cheap water. Cover pile with plastic to reduce loss of water due to evaporation. Sprinkle with water daily to moisten the pile. Compact pile by walking through it or using suitable weight. The purpose is to let the grasses, leaves, and other cellulosic material to partially rot. Depending on temperature, moisture content and compactness partial decay may take place within 3 to 45 days or even longer if not provided with sufficient moisture. The grass fibers must easily break before it is put into the grinding, cutting and pelletizing machine so less energy will be needed to process the green charcoal. Also when partially decayed, the lignin of the plant cells ooze out as cementing material.

The grinding, cutting and extruding operation can be done by one machine using a minimum of 10 HP. Lesser or more horsepower can be utilized depending on the volume of pellets desired to produce per hour.

After the green charcoal pellets are extruded or formed, the pellets can be solar dried; air-dried or furnace kiln dried. The dried green charcoal can be marketed as such particularly for industrial boilers, town gas makers or alcohol distillers. Or it can be made into charcoal using the various processes for charcoal making.

The resultant green charcoal has an average of 8,758 BTU, 261 $^{O}$C heating temperature and 100 grams burn in 45 minutes.

In actual operation, most types of grasses, leaves, cellulosic agricultural and garbage wastes are mixed resulting to the above BTU average. However, we include without limiting our claims as part of sample 1 some green charcoal from pure specific leaves and grasses with their corresponding BTU, temperature, moisture content and some observations. All the procedures follow sample 1, except that fresh grass were processed immediately.

Sample 1a
Pure fresh binunga leaves, BTU 5980; 150 $^{O}$C average heating temperature, 45 minutes burning time for 100 grams sample.

Sample 1b
Pure fresh ipil-ipil leaves with stalk, BTU 8096.72; 172 $^{O}$C; 30 minutes burning time.

Sample 1c
Pure fresh banig-banig grass (Visayan), same as para grass but thinner, BTU 7333.2; 32 minutes burning time, 42 $^{O}$C heating temperature.

Sample 1d

Pure fresh water hyacinth, BTU 1,943; 182 $^\circ$C;
20 minutes burning time.


Sample 1e

Pure Cassava leaves, BTU 3,247; 186 $^\circ$C;
35 minutes burning time.


Sample 1f

Pure fresh bakawan leaves, BTU 3,067.14; 102 $^\circ$C
heating temperature; 15 minutes burning time.


From the above, it shows that green charcoal from
partially decayed grass gives higher BTU, higher heating
temperature, and longer burning thime that green charcoal from freshly cut grass.


Example II


Green charcoal with composition of ground coal and
binunga leaves (tropical soft wood with broad leaves)
and stalks:


Gather binunga leaves and stalks and wet thoroughly
with water. Allow these material to partially decay by
letting the moistened materials stand for 3 to 45 days;


Cut and grind the partially decayed cellulosic
materials;


Reduce chunks of coal to 10-100 mesh by processing,
grinding and pulverizing in a suitable machine;


Measure required amounts of decayed cellulosic
materials and pulverized coal in the proportionate amounts
of 50% binunga leaves and stalks and 50% coal by weight
respectively;

The mixture is then passed through a pelletizing and extrusion machine to compact the green charcoal mixture and form it into green charcoal pellets of desired size.

The resultant green charcoal pellets are then sorted and placed on suitable pellets and dried thoroughly. These dried green charcoal pellets are placed in suitable sacks for containers for storage and sale.

The moisture content of the resulting mixture before drying is 42%.

The resultant green charcoal has a BTU of 27,499 and 150 gm. burns in an hour with a temperature of 210 $^{\circ}$C.

Example III

Preparation of green charcoal with composition of assorted cut grasses and coal. The process of Examples I and II is followed using 20% cut grasses and 80% coal by weight.

The resultant green charcoal has a BTU of 20,000, 500 grams burns in an hour and 20 minutes with temperature of 240 $^{\circ}$C. However, this mixture is not advisable for cooking in residential areas due to its very irritating odor and the burning ambers are dim.

Example IV

Preparation of green charcoal with a composition of grasses and coal. The process of Examples I and II is followed using 50% grasses and 50% coal by weight.

The resultant green charcoal has a BTU of 12,000 and the temperature reach is 210 $^{O}$C. This resultant mixture is recommended for cooking due to its semi-aromatic smell and the amber is bright.

Example V

Preparation of green charcoal with composition of grasses and coal. The process of Examples I and II using grasses 60% by weight and ground coal 40% by weight.

The starting moisture content was 43%. The resultant green charcoal has a BTU of 11,500 and the temperature is 205 $^{O}$C. It has a very bright amber and agreeable smell.

Example VI

Green charcoal preparation using 70% assorted grasses and 30% ground coal and following the process of Examples I and II.

The resultant green charcoal has a BTU of 10,000, 50% starting moisture content and 500 grams burns for an hour and 5 minutes.

Example VII

Green charcoal preparation using 50% cellulosic garbage and 50% ground coal and following the process of Examples I and II.

Cellulosic garbage, such as papers, cartoons, twigs, leaves, grasses, etc. taken from an average Metro Manila garbage (about 30% of total garbage pile) has a moisture content of 42%.

The resultant green charcoal has a BTU of 8,745.52 and temperature of 190 $^\circ$C.

### Example VIII

Green charcoal preparation using 50% water hyacinth leaves, roots and stalks and 50% coal and following the process of Examples I and II.

The pure ground water hyacinth has 64% moisture.

The resultant green charcoal has 10,786.40 BTU and temperature of 182 $^\circ$C.

### Example IX

Green charcoal preparation using 50% cassava leaves and stalks and 50% coal and following the process of Examples I and II.

The moisture content of ground cassava leaves and stalks is 35%.

The resultant green charcoal has 11,780 BTU, temperature of 186 $^\circ$C and 500 grams burns in an hour and 15 minutes. It also has good amber.

### Example X

Green charcoal preparation using 50% ground banana leaves and 50% coal and following the process of Examples I and II.

Ground banana leaves with 45% moisture content and coal with 22% moisture content yield a 8,900 BTU and half kilo burns in 55 minutes.

Example XI

Green charcoal preparation using 50% ground banana stalks and 50% coal and following the process of Examples I and II.

Ground banana stalks has 65% moisture content.

The resultant green charcoal has 8,300 BTU.

Example XII

Green charcoal preparation using 50% leaves of Albesia talcata and 50% coal and following the process of Examples I and II.

The raw material Albesia talcata leaves has 65% moisture content.

The resulting green charcoal has 10,240 BTU and 130 $^{\circ}$C temperature.

Example XIII

Green charcoal preparation using 50% blue-green algae and 50% coal and following the process of Examples I and II.

Blue-green algae has a 60% moisture content.

The resultant green charcoal has 7,200 BTU, 112 $^{\circ}$C temperature and a half kilo burns in 39 minutes.

Example XIV

Green charcoal preparation using 50% sludge of high organic content and 50% ground coal and following the process of Examples I and II.

The resultant green charcoal has 5,500 BTU, 260 $^\circ$C temperature and a half kilo burns for 45 minutes.

### Example XV

Green charcoal preparation using 50% dried, ground chicken dung and 50% ground coal and following process of Examples I and II.

Both dried, ground chicken dung and ground coal has 20% moisture content respectively.

The resultant green charcoal has 8,800 BTU, 230 $^\circ$C temperature and 500 grams burns in 49 minutes.

### Example XVI

Green charcoal preparation using 50% seaweeds consisting of giant kelp and other species and 50% ground coal and following the process of Examples I and II.

The resultant green charcoal has 9,800 BTU, 230 $^\circ$C temperature and half kilo burns in 55 minutes.

### Example XVII

Green charcoal preparation using 50% cut and ground rice straw and 50% coal and following process of Examples I and II.

The resultant green charcoal has 7,200 BTU, 180 $^\circ$C temperature and half kilo burns for 45 minutes.

### Example XVIII

Green charcoal preparation using 50% cogon and 50% coal and following the process of Examples I and II.

The resultant green charcoal has a BTU of 7,070, 173 $^{\circ}$C temperature and half kilo burns for 45 minutes.

### Example XIX

Green charcoal preparation using 50% ground partially decayed talahib and 50% coal and following the process of Examples I and II.

The resultant green charcoal has 7,400 BTU, 205$^{\circ}$C temperature and a half kilo burns for 53 minutes.

### Example XX

Green charcoal preparation using 50% ground and partially decayed acacia leaves and 50% powdered coal and following the process of Examples I and II.

The resultant green charcoal has 9,500 BTU, 230 $^{\circ}$C temperature.

### Example XXI

Green charcoal preparation using 50% ground and pelletized ipil-ipil leaves and twigs and 50% coal and following the process of Examples I and II.

The resultant green charcoal has 8,900 BTU and half kilo burns for 55 minutes.

Example XXII

Green charcoal preparation using 50% ground wood charcoal instead of coal and 50% grasses and following the process of Examples I and II.

The resultant green charcoal has 11,500 BTU and 211 $^{\circ}$C temperature. This resultant is advisable for cooking due to its aromatic smell and the amber is bright.

The use of ground wood charcoal instead of coal is practical where you have ipil-ipil plantation of a big source of minor forest trees are available.

Example XXIII

Green charcoal preparation using 50% partially decayed grass and 50% by weight of partially decayed moist sawdust and following the process of Examples I and II.

The resultant green charcoal has 7,500 BTU, average temperature of 248 $^{\circ}$C and half kilo burns for 50 minutes.

Example XXIV

Green charcoal preparation using 50% partially decayed grass and leaves and 50% by weight partially decayed wood chips and following the process of Examples I and II.

The resultant green charcoal has 7,100 BTU, 250 $^{\circ}$C and half kilo burns in 53 minutes.

The raw coal utilized in the various experiments came from Cebu, of lignite type, with moisture content of 19% average of 7,605.57 BTU. The charcoal used were made from lumber waste slabs with an average BTU of 7,000 and 8% moisture content. The pure partially decayed grass, one month and 7 days has 79% moisture content and gave 10,416.16 BTU. The coke coal with 7% moisture content gave 17,159.3 BTU.

Then, 400 kilos of the partially decayed grass (79 MC) was mixed with 41 kilos of coal (7% MC) were mixed to attain a 60% grass and 40% coal on equal moisture content basis and the fresh briquettes had 20% moisture content and gave 10,660 BTU.

The green charcoal made of 60% (400 kilos) partially decayed grass and 40% (41 kilos) coal gave 19,012 BTU.

The above shows that there is catalystic effect of decayed grass and coal combination since the resulting mixture gave higher BTU than the BTU of each component, either grass or coal.

The BTU of fresh grass is 5,024.600 while the BTU of the partially decayed grass (1 month and 2 days) gave 10,418 BTU showing that partially decayed grass give much higher BTU than fresh grass.

In the light of the teachings derived from the foregoing disclosures, it is obvious that several modifications and variations can be practiced without departing from the scope and spirit of the invention.

- 1 -

**0055790**

What is claimed is:

1. A process of producing a green charcoal which comprises the steps of:

   (a) gathering the cellulosic material selected from the group consisting of grasses, leaves, twigs, shrubs, giant kelp, water hyacinths, banana leaves or stalks, coconut leaves, blue-green algae, sawdust, paper, cellulosic garbage, cellulosic agricultural waste and mixtures thereof;

   (b) spraying, wetting or soaking said cellulosic material with water;

   (c) allowing said cellulosic material to partially decay by letting it stand for 3 to 45 days;

   (d) cutting and grinding the partially decayed cellulosic material;

   (e) pelletizing and extruding the green charcoal;

   (f) sorting and drying thoroughly the green charcoal pellets; and

   (g) packing the resulting green charcoal pellets in sacks.

2. The process according to claim 1 wherein pulverized coal is admixed with ground partially decayed cellulosic material after step (d) in the proportionate amount of from 10-90% to 90-10% by weight, respectively.

3. Green charcoal product produced by the process of claim 1.

4. Green charcoal product produced by the process of claim 2.

European Patent
Office

**EUROPEAN SEARCH REPORT**

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| X | FR - A - 2 307 866 (LOAS)<br><br>* claims 1-6 * | 1,3 | C 10 L 5/44 |
| X | GB - A - 4029/1878 (BARLOW)<br><br>* claims; page 3, lines 18-26 * | 1-4 | |
| X | GB - A - 244 517 (CARPENTER)<br><br>* claims 1,2,8,10-13, page 4, lines 114-126 * | 1-4 | |

TECHNICAL FIELDS SEARCHED (Int Cl.³)

C 10 L 5/44
5/14

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-12-1981 | MEERTENS |

EPO Form 1503.1  06.78